(19) Europäisches Patentamt
European Patent Office
Office européen des brevets

(11) Veröffentlichungsnummer: **0 680 980 A1**

# (12) EUROPÄISCHE PATENTANMELDUNG

(21) Anmeldenummer: **95106154.8**

(51) Int. Cl.6: **C08F 297/08**, C08F 4/646

(22) Anmeldetag: **25.04.95**

(30) Priorität: **04.05.94 DE 4415625**

(43) Veröffentlichungstag der Anmeldung: **08.11.95 Patentblatt 95/45**

(84) Benannte Vertragsstaaten: **AT BE DE ES FR GB IT NL**

(71) Anmelder: **BASF AKTIENGESELLSCHAFT**
**D-67056 Ludwigshafen (DE)**

(72) Erfinder: **Kersting, Meinolf, Dr.**
**Friedelsheimer Strasse 12**
**D-67098 Bad Dürkheim (DE)**
Erfinder: **Müller, Patrik, Dr.**
**Johanniskreuzer Strasse 67**
**D-67661 Kaiserslautern (DE)**

## (54) Copolymerisate des Propylens mit hohem Kautschukgehalt.

(57) Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man

a) in der ersten Polymerisationsstufe bei einem Druck von 20 bis 35 bar, einer Temperatur von 60 bis 90 °C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend

b) in einer zweiten Polymerisationsstufe bei einem Druck von 16 bis 25 bar, wobei dieser Druck wenigstens 3 bar unter dem Druck der ersten Polymerisationsstufe liegt, einer Temperatur von 70 bis 90 °C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 10:1 und das Gewichtsverhältnis zwischen den in der ersten und den in der zweiten Polymerisationsstufe umgesetzten Monomeren auf 0,5:1 bis 5:1 einstellt.

EP 0 680 980 A1

Die vorliegende Erfindung betrifft Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man

a) in der ersten Polymerisationsstufe bei einem Druck von 20 bis 35 bar, einer Temperatur von 60 bis 90 °C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das verhältnis Zwischen dem Partialdruck des Propylens und dem des weiteren Alk-1-ens auf 10:1 bis 500:1 einstellt und anschließend

b) in einer zweiten Polymerisationsstufe bei einem Druck von 16 bis 25 bar, wobei dieser Druck wenigstens 3 bar unter dem Druck der ersten Polymerisationsstufe liegt, einer Temperatur von 70 bis 90 °C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 10:1 und das Gewichtsverhältnis zwischen den in der ersten und den in der zweiten Polymerisationsstufe umgesetzten Monomeren auf 0,5:1 bis 5:1 einstellt.

Durch Polymerisation an Ziegler-Natta-Katalysatoren erhältliche Propylen-Ethylen-Copolymerisate sind bereits in einer Reihe von Patentschriften beschrieben worden. Aus der US-A 4 260 710 ist bekannt, Homo- und Copolymerisate von Alk-1-enen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, US-A 4 857 613, EP-A 171 200).

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945, DE-A 38 27 565), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine gute Schlagzähigkeit und Steifigkeit auf.

In der DE-A 4 004 087 wird die Herstellung eines Copolymerisats des Propylens beschrieben, wobei zunächst in einer ersten Polymerisationsstufe Propylen zusammen mit einem weiteren Alk-1-en polymerisiert wird und anschließend in einer zweiten Polymerisationsstufe dem aus der ersten Polymerisationsstufe erhaltenen Polymerisat ein Gemisch aus Propylen und einem weiteren Alk-1-en hinzupolymerisiert wird. Das dabei verwendete Verfahren wird in der Gasphase und in Anwesenheit eines Ziegler-Natta-Katalysatorsystems durchgeführt. Die daraus erhaltenen Copolymerisate des Propylens zeichnen sich u.a. durch eine gute Kerbschlagzähigkeit, eine hohe Schüttdichte und eine niedrige Neigung zum Weißbruch aus.

Die aus der DE-A 4 004 087 bekannten Copolymerisate des Propylens weisen u.a. auch eine günstige Steifigkeits/Schlagzähigkeits-Bilanz auf, was sich in bezug auf viele Anwendungsbereiche als sehr nützlich erweist. Für eine Reihe von technischen Anwendungen werden aber teilweise sehr hohe Anforderungen an die Schlagzähigkeit der dabei eingesetzten Polymerisate gestellt, die von den bisher bekannten Copolymerisaten des Propylens nicht in ausreichendem Maß erfüllt werden.

Der vorliegenden Anmeldung lag daher die Aufgabe zugrunde, den geschilderten Nachteilen abzuhelfen und neue Copolymerisate des Propylens zu entwickeln, die sich durch eine nochmals verbesserte Schlagzähigkeit auszeichnen, wobei die übrigen anwendungstechnischen Eigenschaften, wie beispielsweise die Steifigkeit, noch einen ausreichend hohen Wert aufweisen sollten.

Demgemäß wurden die eingangs definierten neuen Copolymerisate des Propylens gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate und Aluminiumphosphat gut bewährt haben. Als besonders bevorzugter Träger wird $SiO_2 \cdot aAl_2O_3$ verwendet, wobei a für einen Wert von 0 bis 2, insbesondere von 0 bis 0,5 steht. Die als Träger verwendeten Stoffe können bis zu 10 Gew.-% Wasser enthalten.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

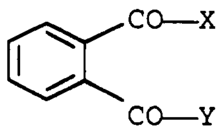

I

verwendet, wobei X und Y jeweils für Chlor oder einen $C_1$- bis $C_{10}$-Alkoxyrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alklgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der US-A 4 857 613, der GB-A 2 111 066 und der DE-A 40 04 087 beschrieben.

Die titanhaltige Feststoffkomponente wird mit einem Cokatalysator als Ziegler-Natta-Katalysatorsystem verwendet. Als Cokatalysatoren kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als Weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugte Elektronendonorverbindungen sind dabei siliciumorganische Verbindungen, insbesondere solche der allgemeinen Formel II

$R^1_nSi(OR^2)_{4-n}$ II

wobei $R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe beseichnet und n für die Zahlen 1, 2 oder 3 steht. Besonders bevorzugt werden dabei solche Verbindungen, in denen $R^1$ gleich oder verschieden ist und eine $C_1$- bis $C_8$-Alkylgruppe oder eine 5- bis 7-gliedrige Cycloalkylgruppe, $R^2$ gleich oder verschieden ist und eine $C_1$- bis $C_4$-Alkylgruppe und n die Zahlen 1 oder 2 bedeutet.

Unter diesen Verbindungen sind Dimethoxydiisopropylsilan, Dimethoxyisobutylisopropylsilan, Dimethoxydiisobutylsilan, Dimethoxydicyclopentylsilan, Diethoxyisobutylisopropylsilan, Dimethoxyisobutylsek.butylsilan und Dimethoxyisopropylsek.butylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird in der ersten Polymerisationsstufe bei einem Druck von 20 und 35 bar, einer Temperatur von 60 bis 90 °C und einer mittleren Verweilzeit des Reaktionsgemisches von 0,5 bis 5 Stunden durchgeführt. Bevorzugt sind dabei Drücke von 24 bis 32 bar, Temperaturen von 65 bis 85 °C und mittlere Verweilzeiten von 1,0 bis 3,0 Stunden. Bevorzugt wählt man die Reaktionsbedingungen so, daß in der ersten Polymerisationsstufe pro mmol der Aluminiumkomponente 0,05 bis 2 kg, bevorzugt 0,1 bis 1,5 kg, eines Propylen-Copolymerisats gebildet werden. Als Comonomer wird dabei ein Alk-1-en verwendet, beispielsweise Ethylen, But-1-en, Pent-1-en, Hex-1-en, Hept-1-en oder Oct-1-en oder ein Gemisch aus mehreren Alk-1-enen. Bevorzugte Comonomere sind Ethylen und But-1-en. In der ersten Polymerisationsstufe wird das Verhältnis zwischen dem Partialdruck des Propylens und dem des Alk-1-ens üblicherweise auf 10:1 bis 500:1, insbesondere auf 15:1 bis 200:1, eingestellt. Wird in der ersten Polymerisationsstufe ein Comonomerengemisch aus Propylen, Ethylen und einem $C_4$-$C_{10}$-Alk-1-en verwendet, so sollte das Verhältnis der Partialdrücke zwischen Ethylen und dem $C_4$-$C_{10}$-Alk-1-en auf 20:1 bis 1:10, insbesondere auf 10:1 bis 1:5 eingestellt werden. Die Polymerisation wird dabei in Anwesenheit von Wasserstoff durchgeführt, wobei vorzugsweise ein Partialdruckverhältnis zwischen Propylen und Wasserstoff von 30:1 bis 180:1, insbesondere von 30:1 bis 150:1 eingestellt wird.

Das hierbei erhältliche Copolymerisat des Propylens wird nach Beendigung der Reaktion zusammen mit dem Katalysator aus der ersten Polymerisationsstufe ausgetragen und in die zweite Polymerisationsstufe eingeführt, wo diesem ein Gemisch von Propylen und weiteren Alk-1-enen hinzupolymerisiert wird.

Darunter werden neben Ethylen und But-1-en insbesondere noch Pent-1-en, Hex-1-en, Hept-1-en und Oct-1-en verstanden, wobei Ethylen und But-1-en bevorzugt verwendet werden. Dabei kann das Propylen sowohl mit einem Alk-1-en als auch mit einem Gemisch aus Ethylen und einem $C_4$-$C_{10}$-Alk-1-en dem aus der ersten Polymerisationsstufe ausgebrachten Copolymerisat hinzupolymerisiert werden. Vorzugsweise wird in der zweiten Polymerisationsstufe entweder ein Gemisch aus Propylen und Ethylen oder ein Gemisch aus Propylen, Ethylen und But-1-en umgesetzt. Die Menge der jeweils eingesetzten Monomere ist dabei so zu bemessen, daß das Verhältnis der Partialdrücke zwischen Propylen und den weiteren Alk-1-enen im Bereich von 0,5:1 bis 10:1, insbesondere im Bereich von 1,0:1 bis 5:1, liegt. Für den Fall, daß in der zweiten Polymerisationsstufe ein Gemisch aus Propylen, Ethylen und einem $C_4$-$C_{10}$-Alk-1-en copolymerisiert wird, ist ferner dafür zu sorgen, daß das Verhältnis der Partialdrücke zwischen Ethylen und dem $C_4$-$C_{10}$-Alk-1-en auf 2:1 bis 100:1, insbesondere auf 5:1 bis 50:1 eingestellt wird. Durch geeignete Wahl der Reaktionsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 5:1, insbesondere im Bereich von 0,5:1 bis 3:1, liegt.

Die Polymerisation erfolgt in der zweiten Polymerisationsstufe bei einem Druck von 16 bis 25 bar, einer Temperatur von 70 bis 90 °C und einer mittleren Verweilzeit des Reaktionsgemisches von 0,5 bis 5 Stunden. Bevorzugt sind dabei Drücke von 16 bis 20 bar, Temperaturen von 75 bis 80 °C und mittlere Verweilzeiten von 1,0 bis 3,0 Stunden. Dabei sollte der Druck in der zweiten Polymerisationsstufe wenigstens 3 bar unter dem Druck der ersten Polymerisationsstufe liegen. Die Polymerisation erfolgt auch in der zweiten Polymerisationsstufe vorzugsweise in Anwesenheit von Wasserstoff, wobei bei einem Partialdruckverhältnis zwischen Propylen und Wasserstoff von 100:1 bis 5:1, insbesondere von 60:1 bis 10:1 gearbeitet wird.

Weiterhin kann es sich empfehlen, dem Reaktionsgemisch der zweiten Polymerisationsstufe ein $C_1$- bis $C_8$-Alkanol, insbesondere ein $C_1$-$C_4$-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des $C_1$-$C_8$-Alkanols wird dabei zweckmäßigerweise so bemessen, daß das Molverhältnis zwischen dem $C_1$-$C_8$-Alkanol und der als Cokatalysator dienenden Aluminiumverbindung 0,01:1 bis 10:1, insbesondere 0,02:1 bis 5:1, beträgt.

Die mittleren Molmassen der dabei erhältlichen erfindungsgemäßen Copolymerisate des Propylens liegen zwischen 10 000 bis 1 000 000, die Schmelzflußindices zwischen 0,1 bis 100 g/10 min, vorzugsweise zwischen 0,2 bis 20 g/10 min, jeweils gemessen nach DIN 53 735 bei 230 °C und 2,16 kg. Der

Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird.

Die erhaltenen Copolymerisate des Propylens weisen u.a. neben einer sehr guten Kerbschlagzähigkeit noch eine ausreichend hohe Steifigkeit auf. Das ebenfalls erfindungsgemäße Verfahren zur Herstellung dieser Copolymerisate zeichnet sich u.a. durch eine hohe Produktivität aus.

Die erfindungsgemäßen Copolymerisate des Propylens können darüber hinaus noch übliche Additive wie beispielsweise Nukleierungsmittel, Stabilisatoren, Gleitmittel, Antioxidantien, Wärmestabilisatoren, UV-Stabilisatoren und Verarbeitungshilfsmittel enthalten.

Aufgrund ihrer guten mechanischen Eigenschaften eignen sich die erfindungsgemäßen Copolymerisate des Propylens u.a. zur Herstellung von Folien, Rohren, Belägen, Fasern, Hohlkörpern, Spritzgußartikeln und von Formkörpern.

Beispiele 1 bis 3 und Vergleichsversuche A und B

Das Verfahren wurde in allen Beispielen 1 bis 3 und in den Vergleichsversuchen A und B in zwei hintereinander geschalteten Rührautoklaven mit einem Nutzvolumen von jeweils 180 l in Anwesenheit von Wasserstoff als Molekulargewichtsregler durchgeführt. Beide Reaktoren enthielten ein bewegtes Festbett aus feinteiligem Polypropylen.

In den ersten Polymerisationsreaktor wurden die jeweiligen Comonomere, d.h. Propylen und Ethylen gasförmig eingeleitet und bei einer mittleren Verweilzeit von 2 Stunden mit Hilfe eines Ziegler-Natta-Katalysators polymerisiert. Die genauen Versuchsbedingungen, das Verhältnis der Partialdrücke zwischen Propylen und Ethylen sowie das Gewichtsverhältnis zwischen den in der ersten und den in der zweiten Polymerisationsstufe umgesetzten Monomeren sind für alle Beispiele und die Vergleichsversuche A und B in der Tabelle 1 wiedergegeben.

In allen Versuchen erfolgte die Polymerisation kontininierlich mit Hilfe eines Ziegler-Natta-Katalysators, wobei pro Stunde 1 g einer titanhaltigen Feststoffkomponente, 60 mmol Triethylaluminium und 6 mmol Dimethoxyisobutylisopropylsilan als Katalysatorbestandteile verwendet wurden. Dabei wurden pro mmol der Aluminiumverbindung in der ersten Polymerisationszone 0,35 kg Propylen-Copolymerisat erzeugt.

Das im ersten Reaktor gebildete Propylen-Copolymerisat wurde anschließend zusammen mit dem Katalysator in den zweiten Rührautoklaven übergeführt und dort bei einer Verweilzeit von 1,1 Stunden dem Copolymerisat ein Gemisch von Propylen und Ethylen in Anwesenheit von Isopropanol hinzupolymerisiert. Die genauen Versuchsbedingungen, das Verhältnis der Partialdrücke zwischen den einzelnen Comonomeren und das Mengenverhältnis zwischen Isopropanol und der Aluminiumkomponente sind für alle Beispiele in der Tabelle 2 wiedergegeben.

Die titanhaltige Feststoffkomponente wurde nach folgendem Verfahren hergestellt.

Dazu versetzte man in einer ersten Stufe $SiO_2$, welches einen Teilchendurchmesser von 20 bis 45 mm, ein Porenvolumen von 1,75 $cm^3/g$ und eine Oberfläche von 320 $m^2/g$ aufwies, mit in n-Heptan gelöstem Butyl-octylmagnesium, wobei pro Mol $SiO_2$ , 0,3 mol der Magnesiumverbindung eingesetzt wurden. Die Lösung wurde 1,5 Stunden lang bei 90 °C gerührt, danach auf 20 °C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 mol Ethanol, bezogen auf 1 mol Magnesium, hinzugefügt. Dieses Gemisch wurde 1,5 Stunden bei 80 °C gerührt und danach mit 6 mol Titantetrachlorid und 0,5 mol Phthalsäuredi-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125 °C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nicht mehr als 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Die Eigenschaften der mit Hilfe dieses Ziegler-Natta-Katalysatorsystems erhaltenen Copolymerisate des Propylens sind für alle Versuche in der nachstehenden Tabelle 3 wiedergegeben. Dabei werden u.a. der Schmelzflußindex für die aus den beiden Polymerisationsstufen ausgebrachten Copolymerisate aufgeführt. Die Tabelle enthält ferner für alle Versuche die jeweiligen Werte für die Kerbschlagzähigkeit und die Steifigkeit (Schubmodul), sowie für die Produktivität (Menge des erhaltenen Copolymerisats in Gramm pro

Gramm eingesetzte titanhaltige Katalysatorkomponente).

Tabelle 1
Reaktionsbedingungen in der ersten Polymerisationsstufe

| Versuche | Temperatur [°C] | Druck [bar] | Verhältnis Partialdrücke Propylen : Ethylen | Verhältnis des Umsatzes in der 1. Polymerisationsstufe zum Umsatz in der 2. Polymerisationsstufe |
|---|---|---|---|---|
| 1 | 70 | 27 | 98:1 | 1,50 |
| 2 | 70 | 27 | 105:1 | 1,0 |
| 3 | 70 | 28 | 97:1 | 1,10 |
| Vergleichsversuche | | | | |
| A | 70 | 27 | 98:1 | 2,33 |
| B | 70 | 27 | 105:1 | 2,0 |

Tabelle 2

Reaktionsbedingungen in der zweiten Polymerisationsstufe

| Versuche | Temperatur [°C] | Druck [bar] | Verhältnis Partialdrücke Propylen : Ethylen | Verhältnis mmol Isopropanol: mmol Aluminiumkomponente |
|---|---|---|---|---|
| 1 | 80 | 17 | 2,2:1 | 0,33:1 |
| 2 | 80 | 17 | 2,2:1 | 0,25:1 |
| 3 | 80 | 20 | 2,1:1 | 0,30:1 |
| Vergleichsversuche | | | | |
| A | 68 | 15 | 2,2:1 | 0,33:1 |
| B | 68 | 15 | 2,2:1 | 0,25:1 |

Tabelle 3

Eigenschaften der erhaltenen Copolymerisate des Propylens

| Versuche | Produktivität [g Copolymerisat/g titanhaltige Katalysatorkomponente] | Schmelzflußindex a) [g/10 min] nach Stufe 1 | /nach Stufe 2 | Kerbschlagzähigkeit b) [kJ/m²] | Steifigkeit c) (Schubmodul) [N/mm²] |
|---|---|---|---|---|---|
| 1 | 28400 | 5,4 | 1,4 | ohne Bruch | 240 |
| 2 | 40600 | 2,7 | 1,0 | ohne Bruch | 178 |
| 3 | 56800 | 5,9 | 1,2 | ohne Bruch | 198 |
| Vgl.Vers.A | 24600 | 5,7 | 1,2 | 100 % angebrochen | 295 |
| Vgl.Vers.B | 28700 | 2,8 | 1,1 | 100 % angebrochen | 230 |

a) nach DIN 53 735, bei 230°C und 2,16 kg

b) nach DIN 53 453, bei -20°C

c) nach DIN 53 445

## Patentansprüche

1. Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches

neben einer geträgerten titanhaltigen Feststoffkomponente noch als Cokatalysatoren eine Aluminiumverbindung und eine siliciumorganische Verbindung enthält, wobei man

a) in der ersten Polymerisationsstufe bei einem Druck von 20 bis 35 bar, einer Temperatur von 60 bis 90 °C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend

b) in einer zweiten Polymerisationsstufe bei einem Druck von 16 bis 25 bar, wobei dieser Druck wenigstens 3 bar unter dem Druck der ersten Polymerisationsstufe liegt, einer Temperatur von 70 bis 90 °C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 10:1 und das Gewichtsverhältnis zwischen den in der ersten und den in der zweiten Polymerisationsstufe umgesetzten Monomeren auf 0,5:1 bis 5:1 einstellt.

**2.** Copolymerisate nach Anspruch 1, dadurch erhältlich, daß man in der ersten Polymerisationsstufe als Alk-1-en Ethylen verwendet.

**3.** Copolymerisate nach Anspruch 1, dadurch erhältlich, daß man in der zweiten Polymerisationsstufe als Alk-1-en Ethylen verwendet.

**4.** Copolymerisate nach den Ansprüchen 1 bis 3, dadurch erhältlich, daß man die Polymerisation in der zweiten Polymerisationsstufe in Gegenwart eines $C_1$-$C_8$-Alkanols vornimmt.

**5.** Copolymerisate nach den Ansprüchen 1 bis 4, dadurch erhältlich, daß man in der zweiten Polymerisationsstufe das Verhältnis der Partialdrücke zwischen Propylen und dem des weiteren Alk-1-ens auf 1,0:1 bis 5:1 einstellt.

**6.** Copolymerisate nach den Ansprüchen 1 bis 5, dadurch erhältlich, daß man das Gewichtsverhältnis zwischen den in der ersten und den in der zweiten Polymerisationsstufe umgesetzten Monomeren auf 0,5:1 bis 3:1 einstellt.

**7.** Copolymerisate nach den Ansprüchen 1 bis 6, dadurch erhältlich, daß man die titanhaltige Feststoffkomponente auf Silicium- und Aluminiumoxiden, Aluminiumsilicaten oder auf Aluminiumphosphat trägert.

**8.** Verfahren zur Herstellung von Copolymerisaten des Propylens mit Alk-1-enen gemäß den Ansprüchen 1 bis 7, wobei man aus der Gasphase heraus in einem bewegten Festbett mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, zunächst in einer ersten Polymerisationsstufe bei einem Druck von 20 bis 35 bar, einer Temperatur von 60 bis 90 °C und einer mittleren Verweilzeit des Reaktionsgemisches von 0,5 bis 5 Stunden Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend in einer zweiten Polymerisationsstufe bei einem Druck von 16 bis 25 bar, wobei dieser Druck wenigstens 3 bar unter dem Druck der ersten Polymerisationsstufe liegt, einer Temperatur von 70 bis 90 °C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dadurch gekennzeichnet, daß man das Gewichtsverhältnis zwischen den in der ersten und den in der zweiten Polymerisationsstufe umgesetzten Monomeren auf 0,5:1 bis 5:1 einstellt und in der zweiten Polymerisationsstufe das Verhältnis der Partialdrücke zwischen Propylen und dem des weiteren Alk-1-ens im Bereich von 0,5:1 bis 10:1 beläßt.

**9.** Verfahren nach Anspruch 8, dadurch gekennzeichnet, daß die mittleren Verweilzeiten des Reaktionsgemisches in den beiden Polymerisationsstufen im Bereich von 1,0 bis 3,0 Stunden liegen.

**10.** Verwendung der Copolymerisate des Propylens gemäß den Ansprüchen 1 bis 7 als Folien, Fasern und Formkörper.

Europäisches Patentamt

# EUROPÄISCHER RECHERCHENBERICHT

Nummer der Anmeldung
EP 95 10 6154

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| P,X | DE-A-42 42 056 (BASF AG) 16.Juni 1994<br>* das ganze Dokument *<br>--- | 1-10 | C08F297/08<br>C08F4/646 |
| Y | EP-A-0 442 316 (BASF AG) 21.August 1991<br>* Seite 4, Zeile 16; Ansprüche *<br>* Seite 5, Zeile 34 * | 1-10 | |
| D,Y | & DE-A-40 04 087 (BASF AG)<br>--- | 1-10 | |
| Y | EP-A-0 298 453 (UNION CARBIDE CORP)<br>11.Januar 1989<br>* Ansprüche; Beispiele 1,5 *<br>--- | 1-10 | |
| X | EP-A-0 518 093 (BASF AG) 16.Dezember 1992<br>* Ansprüche; Beispiele *<br>* Seite 4, Zeile 25 - Zeile 38 *<br>* Seite 5, Zeile 3 - Zeile 10 *<br>* Seite 5, Zeile 40 - Zeile 41 *<br>--- | 1-10 | |
| X | EP-A-0 558 987 (BASF AG) 8.September 1993<br>* Seite 4, Zeile 24 - Zeile 37 *<br>* Seite 6, Zeile 19 - Zeile 22 *<br>* Ansprüche; Beispiele 3,4 *<br>--- | 1-10 | RECHERCHIERTE SACHGEBIETE (Int.Cl.6)<br>C08F |
| X | EP-A-0 438 068 (BASF AG) 24.Juli 1991<br>* Seite 5, Zeile 35 - Zeile 37 *<br>* Seite 4, Zeile 20 - Zeile 28 *<br>* Ansprüche *<br>--- | 1-10 | |
| X | EP-A-0 522 784 (SUMITOMO CHEMICAL CO)<br>13.Januar 1993<br>* Ansprüche; Beispiele *<br>--- | 1-9 | |
| X | EP-A-0 355 603 (BASF AG) 28.Februar 1990<br>* das ganze Dokument * | 1-9 | |
| D,X | & DE-A-38 27 565 (BASF AG)<br>---<br>-/-- | 1-9 | |

Der vorliegende Recherchenbericht wurde für alle Patentansprüche erstellt

| Recherchenort | Abschlußdatum der Recherche | Prüfer |
|---|---|---|
| DEN HAAG | 9.August 1995 | Kaumann, E |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 95 10 6154

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 515 855 (BASF AG) 2.Dezember 1992<br>* Seite 2, Zeile 57 - Seite 6, Zeile 5; Ansprüche *<br>----- | 8,9 | |
| | | | RECHERCHIERTE SACHGEBIETE (Int.Cl.6) |
| | | | |

Der vorliegende Recherchenbericht wurde für alle Patentansprüche erstellt

| Recherchenort | Abschlußdatum der Recherche | Prüfer |
|---|---|---|
| DEN HAAG | 9.August 1995 | Kaumann, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument

EPO FORM 1503 03.82 (P04C03)